(19) Europäisches Patentamt
European Patent Office
Office européen des brevets

(11) Veröffentlichungsnummer: **0 290 931 B1**

(12) **EUROPÄISCHE PATENTSCHRIFT**

(45) Veröffentlichungstag der Patentschrift: **22.07.92**

(51) Int. Cl.5: **B01D 46/00**, B01D 46/04, B01D 46/02

(21) Anmeldenummer: **88107097.3**

(22) Anmeldetag: **03.05.88**

(54) **Verfahren und Anlage zum Reinigen von Trocknungsabgasen beim Trocknen von Holzspänen, Holzfasern oder dergleichen.**

(30) Priorität: **11.05.87 DE 3715668**

(43) Veröffentlichungstag der Anmeldung:
**17.11.88 Patentblatt 88/46**

(45) Bekanntmachung des Hinweises auf die
Patenterteilung:
**22.07.92 Patentblatt 92/30**

(84) Benannte Vertragsstaaten:
**AT BE CH DE ES FR GB GR IT LI LU NL SE**

(56) Entgegenhaltungen:
**DE-A- 2 061 925**
**DE-B- 2 044 056**
**DE-U- 1 496 290**
**DE-U- 7 829 337**
**US-A- 3 387 380**

(73) Patentinhaber: **Bison-Werke Bähre & Greten GmbH & Co. KG**

**W-3257 Springe 1(DE)**

(72) Erfinder: **Bartling, Werner**
**Schafsweide 5**
**W-3210 Elze(DE)**
Erfinder: **Jagode, Fritz Helmut**
**Dresdener Strasse 25**
**W-3250 Hameln 1(DE)**

(74) Vertreter: **Dipl.-Phys.Dr. Manitz Dipl.-Ing., Dipl.-W.-Ing. Finsterwald Dipl.-Ing. Grämkow Dipl.-Chem.Dr. Heyn Dipl.-Phys. Rotermund Morgan, B.Sc.(Phys.) Robert-Koch-Strasse 1 W-8000 München 22(DE)**

EP 0 290 931 B1

## Beschreibung

Die Erfindung betrifft ein Verfahren zum Reinigen von Trocknungsabgasen beim Trocknen von Holzspänen, Holzfasern oder dergleichen mittels in einer Brennkammer erzeugter Heißgase, bei dem das getrockente Gut von den Trocknungsabgasen getrennt und wenigstens ein Teil der Trocknungsabgase bei einer oberhalb ihres Taupunktes liegenden Temperatur in Filterschläuchen, -säcken oder dergleichen gefiltert wird.

Ferner ist die Erfindung auf eine Anlage zur Durchführung dieses Verfahrens gerichtet.

Es ist an sich bekannt, daß man Emissionen von feuchten Abgasen aus Spänetrocknern durch Filteranlagen vermindern kann. Problematisch ist jedoch, daß sich solche Anlagen sehr schnell zusetzen. Deshalb wird allenfalls ein Abluftwert von etwa 30 mg/m$^3$ für möglicherweise erreichbar gehalten (DEZ: Holz als Roh- und Werkstoff 43 (1985), S. 410, r. Sp. Abs. 4 Z. 14 - 20).
Aus der DE-U-1496290 ist es im Zusammenhang mit einer Entstaubungsvorrichtung bekannt, Trocknungsgase und Spülluft auf eine Temperatur oberhalb des Taupunkts zu erhitzen, um auf diese Weise Kondensation in den Rohrleitungen zu vermeiden.

Aus der DE-A-2061925 ist ein Verfahren zum Entstauben der Brüden aus Holzspänetrocknungsanlagen bekannt, bei dem aus einer Nachentstaubungsanlage ein Teil der Brüden abgezogen und in die Trocknerfeuerung bzw. in eine Mischkammer zurückgeführt und dort die in den Brüden enthaltenen Feststoffteilchen verbrannt werden.

Der vorliegenden Erfindung liegt die Aufgabe zugrunde, ein Verfahren der eingangs genannten Art zu schaffen, das auf besonders wirtschaftliche Weise eine intensive und einwandfreie Reinigung von Trocknungsabgasen gestattet.

Die Lösung dieser Aufgabe besteht gemäß der Erfindung im wesentlichen darin, daß einerseits zumindest ein Teil der ausgefilterten Teilchen zusammen mit zur Reinigung der Filterschläuche, -säcke oder dergleichen dienender und eine Temperatur oberhalb des Taupunktes weisender Spülluft im wesentlichen kontinuierlich in eine Brennkammer zur Heißgaserzeugung gefördert und verbrannt wird, und daß andererseits ausgefilterte Teilchen zusammen mit Spülluft im Teilstrom dem Strom aus getrocknetem Gut und zu reinigenden Trocknungsabgasen zugeführt werden.

Hierdurch ergeben sich mehrere Vorteile hinsichtlich des Umweltschutzes und der Wirtschaftlichkeit. Zum einen wird sowohl beim Frischluftbetrieb als auch beim Umgasbetrieb ein Abluftwert erreicht, der deutlich unter 30 mg/m$^3$ liegt, vielfach sogar nicht mehr meßbar ist. Schädliche Umwelteinwirkungen durch Luftverunreinigungen sind daher sicher vermieden. Zum anderen wird ein problemloser Langzeitbetrieb gewährleistet, da störende Verklebungseffekte durch Harz-, Holzteer- oder andere Bestandteile weitgehendst ausgeschlossen sind. Von erfindungswesentlicher Bedeutung ist zudem, daß ausgefilterte Teilchen nicht nur in der zur Heißgaserzeugung dienenden Brennkammer verbrannt werden, sondern daß diese ausgefilterten Teilchen in den Strom aus getrocknetem Gut und zu reinigenden Trocknungsabgasen eingeleitet werden, so daß sich diese Teilchen vor dem Erreichen der zweckmäßigerweise von einem Zyklon gebildeten Einrichtung zur Trennung von getrocknetem Gut und Trocknungsabgasen an den getrockneten Holzteilchen festsetzen können. Dies führt wiederum dazu, daß die ausgefilterten Teilchen zu einem wesentlichen Teil zusammen mit dem getrockneten Gut ausgeschieden werden können und nicht mehr zum Filter gelangen. Damit wird in überraschender Weise der Abscheidegrad erhöht und die Filterbelastung verringert, was es in bestimmten Fällen sogar ermöglicht, die Filtereinrichtung kleiner zu dimensionieren.

Insgesamt zeichnet sich somit das Verfahren nach der Erfindung nicht nur durch eine hohe Wirtschaftlichkeit, sondern auch dadurch aus, daß die Anforderungen des Umweltschutzes weit übertroffen werden.

In Ausgestaltung des erfindungsgemäßen Verfahrens besteht die Möglichkeit, die oberhalb des Taupunktes in Filterschläuchen, -säcken oder dergleichen gereinigten Trocknungsabgase vor ihrem Entweichen in die freie atmosphärische Luft zum Beispiel mittels Kohle oder Kies nachzufiltern, um ggf. noch vorhandene organische Holzinhaltsstoffe und Holzzersetzungsprodukte zu erfassen, von denen vor allem die Geruchsbelastung und Reizaktivität der Trocknungsabgase herrührt.

Vorzugsweise wird auch die Temperatur am zur Atmosphäre führenden Auslaß der Filtervorrichtung gemessen und über eine Regelschleife sichergestellt, daß diese Temperatur nicht unter die Taupunkttemperatur absinkt. Beide gemessenen Temperaturen am Eingang und am Ausgang der Filtervorrichtung können somit direkt zur Regelung des Brenners verwendet werden, und zwar gff. in überlagerter Form oder in der Weise, daß die Differenztemperatur als Regelgröße verwendet wird.

Eine zur Durchführung des Verfahrens nach der Erfindung besonders vorteilhafte Anlage umfaßt eine Brennkammer, einen mit der Brennkammer über einen Heißgaskanal verbundenen, eingangsseitig mit einer Aufgabeeinheit versehenen Trockner, eine mit dem Trocknerauslaß verbundene mit einer Fördergebläse versehene Transportleitung und eine Abscheidevorrichtung mit einer Transportleitung, die in eine Filtervorrichtung mündet. Erfindungsgemäß ist diese Anlage dadurch gekennzeichnet, daß die die Abscheidevorrichtung und die Filtervorrichtung verbindende Transportleitung zur Aufnahme von oberhalb des Taupunktes liegenden Trocknungsabgasen vorgesehen ist, daß die Filtervorrichtung gegen Umwelttemperatureinflüsse isoliert ist, daß zwischen der Filtervorrichtung und der Brennkammer eine Transportleitung mit einem Ventilator für die ausgefilterten Teilchen zwecks deren Verbrennung in der Brennkammer angeordnet ist, und daß hinter dem Ventilator von der Transportleitung eine Rohrleitung mit einer Regelklappe abzweigt und sich bis zu der das getrocknete Gut führenden Leitung erstreckt.

Die Filter selbst können aus Webstoff, Stahlgewebe, Kunststoff oder Kombinationen hiervon bestehen, und es ist besonders vorteilhaft, einen zweischichtigen Filteraufbau zu verwenden, wobei die innere Schicht aus einem grobmaschigen Stützgewebe bestehen kann und die äußere Schicht vorzugsweise aus einem insbesondere asymmetrisch aufgebauten Filz besteht. Durch diese Ausgestaltung wird ein besonders großer Abscheidegrad sichergestellt.

Desweiteren ist nach der Erfindung vorzugsweise vorgesehen, daß das Filtermaterial einen verhältnismäßig geringen, vorzugsweise einen maximalen Quellwert von 1% aufweist und/oder eine gewisse Glätte besitzt und/oder antistatisch ist und/oder durch niedrige Anströmgeschwindigkeiten wenig flächenbelastet wird.

Auf diese Weise lassen sich besonders lange Standzeiten des Filtermaterials erzielen. Die Durchlässigkeit, d.h. die Filtercharakteristik bleibt gleich und der Widerstand konstant. Das Vorsehen einer gewissen Glätte führt dazu, daß die Teilchen weniger fest am Material anhaften und damit leichter ablösbar sind, bzw. das Filter leicht zu reinigen ist, wofür zusätzliche Voraussetzung wiederum ist, daß im System keine Taupunktunterschreitung erfolgt.

Weitere vorteilhafte Ausbildungen der Erfindung gehen aus Unteransprüchen hervor.

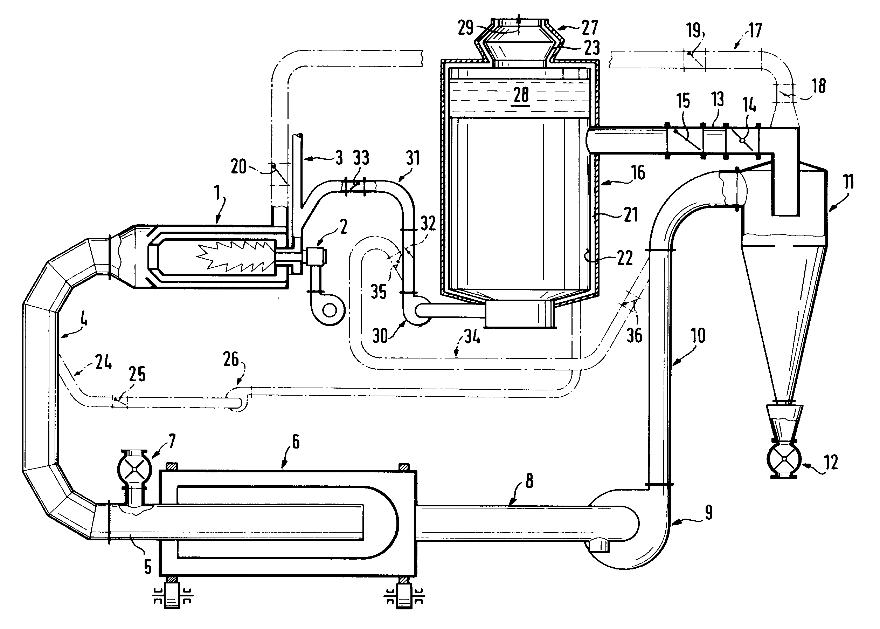

Die Erfindung wird nachfolgend anhand eines Ausführungsbeispiels unter Bezugnahme auf die Zeichnung näher erläutert; die einzige Figur der Zeichnung zeigt eine Anlage zum Reinigen von Trocknungsabgasen beim Trocknen von Holzspänen, Holzfasern oder dergleichen.

Zur Anlage in ihrem grundsätzlichen Aufbau gehört zunächst eine Brennkammer 1, in der durch einen beispielsweise mit Öl oder Gas betriebenen Brenner 2 und durch Zufuhr von Frischluft bei 3 das zum Trocknen benötigte Heißgas erzeugt wird.

Das Heißgas gelangt aus der Brennkammer 1 durch eine Rohrleitung 4 und durch einen Rohrabschnitt 5 in einen Trockner 6. An der Eingangsseite des Trockners 6 ist eine als Zellenradschleuse arbeitende Aufgabeeinheit 7 für das zu trocknende Gut angeordnet.

Die Ausbildung des Trockners 6 ist an sich beliebig, im vorliegenden Fall handelt es sich um einen Dreizugtrommeltrockner. Es kommen aber auch Düsenrohrtrockner, Einzug- und andere Mehrzugtrommeltrockner oder dergleichen in Frage.

Das zu trocknende, in den Rohrabschnitt 5 aufgegebene und zusammen mit dem Heißgas in den Trockner 6 transportierte Gut gelangt am Austritt des Trockners 6 in einen Rohrabschnitt 8, der in an sich bekannter Weise eine nicht weiter dargestellte verschließbare Vorrichtung zum Abscheiden metallischer Gegenstände wie Schrauben, Nägel und ähnlicher Fremdkörper aufweist.

Ein Ventilator 9 befördert das getrocknete Gut und die Trocknungsabgase in einer Rohrleitung 10 zu einem Zyklon 11, in dem das getrocknete Gut von den Trocknungsabgasen getrennt wird. Während das getrocknete Gut über eine Ausfallschleuse 12 auf eine Transportvorrichtung, in eine Hammermühle oder in einen Bunker fallen kann, strömt bei Frischluftbetrieb die Gesamtmenge an Trocknungsabgasen durch eine Rohrleitung 13, in der ein Regelorgan in Gestalt einer Regelklappe 14 und aus Sicherheitsgründen eine Rückschlagklappe 15 festgelegt sind, in eine Filtervorrichtung 16. Bei Umgasbetrieb strömt hingegen eine vorgebbare Teilmenge an Trocknungsabgasen über eine Rohrleitung 17, in der eine Regelklappe 18 und Rückschlagklappen 19 und 20 eingebaut sind, in die Brennkammer 1 bzw. in eine geeignete Mischkammer.

Die Filtervorrichtung 16 weist einerseits vorzugsweise Hauptmerkmale der in der DE-PS 24 30 279 beanspruchten Luftfilteranordnung auf. Andererseits ist sie erfindungsgemäß von einem gegen Umwelttemperatureinflüssen isolierenden Material 21 mit Abstand von den Filterbehälter- und Filterkopfwandungen 22 bzw. 23 umgeben. Auf diese Weise ist eine günstige Voraussetzung dafür geschaffen, die in der Filtervorrichtung 16 zu reinigenden Trocknungsabgase oberhalb des Taupunktes, der zwischen etwa 60 und 80°C liegt, zu halten. Zusätzlich ist es hierbei von Vorteil, einen Teil des mittels des Brenners 2 erzeugten Heißgases abzuzweigen und über eine Rohrleitung 24 mit eingebauter Rückschlagklappe 25 und eingebautem Ventilator 26 in den Mantel 21 der Filtervorrichtung 16 zu leiten. Die Rohrleitung 13 kann ebenfalls isoliert sein.

Im oberen Bereich der Filtervorrichtung 16 ist zwischen dem Anschluß der Rohrleitung 13 und dem Filterkopf 27 eine austauschbare Kohle-, Kiesoder dergleichen Filtereinheit 28 angeordnet.

Die der Filtervorrichtung 16 über die Rohrleitung 13 zugeführten und zu reinigenden Trocknungsabgase strömen mit Bezug auf die Luftfilteranordnung gemäß der DE-PS 24 30 279 durch ein zentrales Rohr abwärts bis in den Bodenbereich der Filtervorrichtung 16 und von dort in um das zentrale Rohr verteilte Kammern, in denen Filter in Form von Schläuchen, Säcken oder dergleichen untergebracht sind, die sich in vertikaler Ebene erstrecken.

Während die Trocknungsabgase durch vorgenannte Filter und durch die Filtereinheit 28 in Pfeilrichtung 29 in die freie Atmosphäre entweichen, werden die an den Filterinnenseiten zurückgehaltenen Teilchen durch einen mittels eines Ventilators 30 erzeugten Vakuum-Spülluftstrom oberhalb des Taupunktes entfernt, wobei im Bodenbereich der Filtervorrichtung 16 ein Reinigungskanal umläuft, der jeweils mit der Öffnung einer Radialkammer in Verbindung gebracht wird, an die jeweils eine Parzelle der Filter angeschlossen ist. Der Reinigungskanal vollendet beispielsweise alle drei Minuten eine Umdrehung, so daß die Filterparzellen in dieser Zeitfolge kontinuierlich nacheinander gereinigt werden.

Die ausgefilterten Teilchen gelangen im Spülluftstrom oberhalb des Taupunktes kontinuierlich durch eine Rohrleitung 31, die eine Regelklappe 32 und eine Rückschlagklappe 33 aufweist, in die Brennkammer 1 oder eine an sich bekannte Mischkammer.

Es ist aber auch vorteilhaft, hinter dem Ventilator 30 zwischen den Rohrleitungen 31 und 10 eine Rohrleitung 34 mit einer Regelklappe 35 und einer Rückschlagklappe 36 vorzusehen. Dadurch kann bei entsprechender Stellung der Regelklappen 32 und 35 ein Teilstrom an mit ausgefilterten Teilchen angereicherter Spülluft abgezweigt werden, um ihn in den Strom aus getrocknetem Gut und zu reinigenden Trocknungsabgasen zu leiten. Die Größe des abgezweigten Teilstromes hängt von der jeweiligen Gesamtmenge an ausgefilterten Teilchen sowie dem vorgegebenen Leistungsniveau der Brennkammer bzw. der Mischkammer ab.

Der Gegenstand der Erfindung eignet sich besonders gut sowohl für Neuanlagen als auch zur Nachrüstung bestehender Anlagen und besitzt einen hohen Grad der Anpassungsfähigkeit an die jeweils vorliegenden Betriebsverhältnisse und gewährleistet jeweils eine überraschend hohe Wirtschaftlichkeit.

**Patentansprüche**

1. Verfahren zum Reinigen von Trocknungsabgasen beim Trocknen von Holzspänen, Holzfasern oder dergleichen mittels in einer Brennkammer erzeugter Heißgase, bei dem das getrocknete Gut von den Trocknungsabgasen getrennt und wenigstens ein Teil der Trocknungsabgase bei einer oberhalb ihres Taupunktes liegenden Temperatur in Filterschläuchen, -säcken oder dergleichen gefiltert wird, dadurch **gekennzeichnet,** daß einerseits zumindest ein Teil der ausgefilterten Teilchen zusammen mit zur Reinigung der Filterschläuche, -säcke oder dergleichen dienender und eine Temperatur oberhalb des Taupunktes aufweisender Spülluft im wesentlichen kontinuierlich in eine Brennkammer zur Heißgaserzeugung gefördert und verbrannt wird, und daß andererseits ausgefilterte Teilchen zusammen mit Spülluft im Teilstrom dem Strom aus getrocknetem Gut und zu reinigenden Trocknungsabgasen zugeführt werden.

2. Verfahren nach Anspruch 1, dadurch **gekennzeichnet,** daß die oberhalb des Taupunktes in Filterschläuchen, -säcken oder dergleichen gereinigten Trocknungsabgase vor ihrem Entweichen in die freie atmospährische Luft mittels Kohle, Kies oder einem hiermit vergleichbaren Filterstoff nachgefiltert werden.

3. Verfahren nach Anspruch 1, dadurch **gekennzeichent,** daß ausgefilterte Teilchen, insbesondere bei Anfall verhältnismäßig großer Mengen, zusammen mit Spülluft im Teilstrom so lange dem Strom aus getrocknetem Gut und zu reinigenden Trocknungsabgasen zugeführt werden, bis die ausgefilterte Teilchenmenge auf einen vorgebbaren Wert verringert ist, der auf die Gegebenheiten in der Brennkammer bzw. in einer Mischkammer abgestimmt ist.

4. Verfahren nach einem oder mehreren der vorhergehenden Ansprüche, dadurch **gekennzeichnet,** daß zumindest ein Teil der Trocknungsabgase vor dem Eintritt in die Filtervorrichtung abgezweigt und direkt unter Ausbildung eines geschlossenen Kreislaufs wieder in die Brennkammer zurückgeführt wird.

5. Verfahren nach einem oder mehreren der vorhergehenden Ansprüche, dadurch **gekennzeichnet,** daß im Bereich des Austritts der gereinigten Luft in die Atmosphäre eine Temperaturmessung vorgenommen und/oder die Temperatur der Trocknungsabgase am Eingang der Filtervorrichtung gemessen und in Abhängigkeit von zumindest einer dieser Temperaturmessungen die Brennersteuerung derart beeinflußt wird, daß die Temperatur der gereinigten, in die Atmosphäre austretenden Trocknungsabgase zumindest im wesentlichen nicht unterhalb des Taupunktes liegt.

6. Anlage zur Durchführung des Verfahrens nach einem oder mehreren der vorhergehenden Ansprüche, bestehend aus einer Brennkammer, einem mit der Brennkammer über einen Heißgaskanal verbundenen, eingangsseitig mit einer Aufgabeeinheit versehenen Trockner, einer mit dem Trockneraulaß verbundenen, mit einem Fördergebläse versehenen Transportleitung und einer Abscheidevorrichtung mit einer Transportleitung, die in eine Filtervorrichtung mündet,
dadurch **gekennzeichnet,**
daß die die Abscheidevorrichtung (11) und die Filtervorrichtung (16) verbindende Transportleitung (13) zur Aufnahme von oberhalb des Taupunktes liegenden Trocknungsabgasen vorgesehen ist, daß die Filtervorrichtung (16) gegen Umwelttemperatureinflüsse isoliert ist, daß zwischen der Filtervorrichtung (16) und der Brennkammer (1) eine Transportleitung (31) mit einem Ventilator (30) für die ausgefilterten Teilchen zwecks deren Verbrennung in der Brennkammer (1) angeordnet ist, und daß hinter dem Ventilator (30) von der Transportleitung (31) eine Rohrleitung (34) mit einer Regelklappe (35) und einer Rückschlagklappe (36) abzweigt und sich bis zu der das getrocknete Gut führenden Leitung (10) erstreckt.

7. Anlage nach Anspruch 6,
dadurch **gekennzeichent,**
daß die Filtervorrichtung (16) einen mit Abstand von den Filterbehälter- und Filterkopfwandungen (22,23) angeordneten, gegen Umwelttemperatureinflüsse isolierenden Mantel (21) aufweist, der insbesondere doppelwandig ausgebildet und durch Öl, Elektroenergie, Wasserdampf oder Heißgas beheizt ist.

8. Anlage nach Anspruch 7,
dadurch **gekennzeichnet,**
daß zwischen der Rohrleitung (4) und dem Doppelmantel (21) der Filtervorrichtung (16) eine Rohrleitung (24) mit eingebauter Rückschlagklappe (25) und mit einem eingebauten Ventilator (26) angeordnet ist.

9. Anlage nach einem der Ansprüche 6 bis 8,
dadurch **gekennzeichnet,**
daß in die Transportleitung (31) ein Ventilator (30) zur Erzeugung eines Vakuum-Spülluftstromes, eine Regelklappe (32) und eine Rückschlagklappe (33) eingebaut sind.

10. Anlage nach einem oder mehreren Ansprüche 6 bis 9,
dadurch **gekennzeichnet,**
daß in der Filtervorrichtung (16) Filter in Form von Schläuchen, Säcken oder dergleichen untergebracht sind, die sich in vertikaler Ebene erstrecken, wobei das Filtermaterial einen verhältnismäßig geringen, vorzugsweise einen maximalen Quellwert von 1% aufweist und/oder eine gewisse Glätte besitzt und/oder antistatisch ist und/oder durch niedrige Anströmgeschwindigkeiten wenig flächenbelastet wird.

11. Anlage zu einem oder mehreren Ansprüche 6 bis 10,
dadurch **gekennzeichnet,**
daß im oberen Bereich der Filtervorrichtung (16) zwischen dem Anschluß der Rohrleitung (13) und dem Filterkopf (27) eine austauschbare Kohle-, Kies- oder dergleichen Filtereinheit (28) angeordnet ist.

12. Anlage nach einem oder mehreren der Ansprüche 6 bis 11,
dadurch **gekennzeichnet,**
daß der Zyklon (11) und die Rohrleitungen (13,17,24,31,34) gegen Umwelttemperatureinflüsse isoliert sind.

**Claims**

1. A method of cleaning dryer exhaust gases during drying of wood chips, wood fibers of the like by means of hot gases generated in a combustion chamber, wherein the dried material is separated from the dryer exhaust gases and provision if made for the filtering of at least a part of the dryer exhaust gases at a temperature above its dew point in filter hoses, filter sacks or the like; characterized in that on the one hand at least a part of the particles which are filtered out are conveyed, together with flushing air which serves to clean the filter hoses, sacks or the like and which has a temperature above the dew point, substantially continuously into a combustion chamber for the generation of hot gases and is burned; and in that on the other hand particles which are filtered out are supplied together with flushing air as a partial flow to the flow of dried material and dryer exhaust gases which are to be cleaned.

2. A method in accordance with claim 1, characterized in that the dryer exhaust gases cleaned above their dew point in filter hoses, filter sacks or the like are filtered again prior to their escape into the free atmospheric air by means of carbon, gravel or a filter material comparable therewith.

3. A method in accordance with claim 1, characterized in that the filtered out particles, in particular when relatively large quantities occur, are supplied together with flushing air as a partial flow to the flow of dried material and dryer exhaust gases which are to be cleaned, until the quantity of filtered out particles has been reduced to a predeterminable value which is matched to the circumstances in the combustion chamber or in the mixing chamber.

4. A method in accordance with one or more of the preceding claims, characterized in that at least a part of the dryer exhaust gases is branched off prior to entry into the filter apparatus and is fed back again directly into the combustion chamber while forming a closed circuit.

5. A method in accordance with one or more of the preceding claims, characterized in that a temperature measurement is effected in the region of the outflow of the cleaned air into the atmosphere, and/or the temperature of the dryer exhaust gases is measured at the input to the filter apparatus; and in that the burner control is influenced in dependence on at least on of these temperature measurements in such a way that the temperature of the cleaned dryer exhaust gases emerging into the atmosphere lies at least substantially not below the dew point.

6. A plant for carrying out the method in accordance with one or more of the preceding claims, comprising a combustion chamber, a dryer connected with the combustion chamber via a hot gas duct and provided at its input side with a supply unit, a transport duct connected to the dryer outlet and provided with a conveyor fan, and a separating apparatus with a transport duct which opens into a filter apparatus, characterized in that the transport duct (13) which connects the separator apparatus (11) and the filter apparatus (16) is arranged to receive dryer exhaust gases lying above the dew point; and in that the filter apparatus (16) is insulated against environmental temperature effects; in that between the filter apparatus (16) and the combustion chamber (1) there is arranged a transport duct (31) with a fan (30) for the filtered out particles for the combustion in the combustion chamber (1); and in that a tubular duct (34) with a regulating flap (35) and a flap trap (36) branches off from the transport duct (31) after the fan (30) and extends to the duct (10) carrying the dried product.

7. A plant in accordance with claim 6, characterized in that the filter apparatus (16) has a jacket (21) insulated against environmental temperature effects which is arranged spaced from the filter container walls and filter head walls (22, 23), which is in particular of double-wall construction, and which is heated by oil, electrical energy, water vapour or hot gas.

8. A plant in accordance with claim 7, characterized in that a tubular duct (24) with an inbuilt flap trap (25) and an inbuilt fan (26) is arranged between the tubular duct (4) and the double jacket (21) of the filter apparatus (16).

9. A plant in accordance with one of the claims 6 to 8, characterized in that a fan (30) for generating a vacuum flushing air flow, a regulating flap (32) and a flap trap (33) are built into the transport duct (31).

10. A plant in accordance with one or more of the claims 6 to 9, characterized in that filters in the form of hoses, sacks or the like which extend in a vertical plane are accommodated in the filter apparatus (16), with the filter material having a relatively low water imbibition value, preferably a maximum imbibition value of 1 % and/or a certain smoothness, and/or being antistatic, and/or being subjected to low surface loading through low incident flow speeds.

11. A plant in accordance with one or more of the claims 6 to 19, characterized in that an interchangeable carbon, gravel or like filter unit (28) is arranged in the upper region of the filter apparatus (16) between the connection for the tubular duct (13) and the filter head (27).

12. A plant in accordance with one or more of the claims 6 to 11, characterized in that the cyclone (11) and the tubular ducts (13, 17, 24, 31, 34) are insulated against environmental temperature effects.

**Revendications**

1. Procédé de purification des émissions de gaz de séchage lors du séchage de copeaux ou de fibres de bois ou similaires, au moyen de gaz chauds produits dans une chambre de combustion, procédé dans lequel le produit séché est séparé des émissions de gaz de séchage et au moins une partie des émissions de gaz de séchage est filtrée dans des filtres à manches, à poches ou similaires, à une température au-dessus de son point de rosée, caractérisé en ce que d'une part on alimente et on fait brûler dans une chambre de combustion sensiblement en continu au moins une partie des particules filtrées ensemble avec l'air de balayage qui sert au nettoyage des filtres à manches, à poches ou similaires et à une température au-dessus du point de rosée, et en ce que d'autre part on admet des particules filtrées, ensemble avec de l'air de balayage, en tant que flux partiel dans le flux de produit séché et d'émissions de gaz de séchage à nettoyer.

2. Procédé selon la revendication 1, caractérisé en ce que les émissions de gaz de séchage nettoyées au-dessus du point de rosée dans des filtres à manches, à poches ou similaires sont à nouveau filtrées avant leur échappement à l'air atmosphérique libre au moyen de charbon, de gravier, ou d'un matériau filtrant comparable.

3. Procédé selon la revendication 1, caractérisé en ce que les particules filtrées, en particulier lorsqu'elles se produisent en quantités relativement importantes, sont alimentées ensemble avec l'air de balayage en tant que flux partiel dans le flux de matériau séché et d'émissions de gaz de séchage à nettoyer, jusqu'à ce que la quantité de particules filtrées soit réduite à une valeur prédéterminable qui est accordée suivant les circonstances qui prévalent dans la chambre de combustion ou dans la chambre de mélange.

4. Procédé selon l'une quelconque des revendications précédentes, caractérisé en ce que l'on dérive au moins une partie des émissions de gaz de séchage avant leur entrée dans l'appareil de filtration et on la réalimente directement dans la chambre de combustion en formant un circuit fermé.

5. Procédé selon l'une quelconque des revendications précédentes, caractérisé en ce que l'on effectue une mesure de température dans la région de la sortie de l'air nettoyé vers l'atmosphère, et/ou que l'on mesure la température des émissions de gaz de séchage à l'entrée de l'appareil de filtration; et en ce que l'on influe sur la commande du brûleur en fonction de l'une au moins de ces mesures de température d'une manière telle que la température des émissions de gaz de séchage nettoyées sortant à l'atmosphère ne soit au moins sensiblement pas au-dessous du point de rosée.

6. Installation pour la mise en oeuvre du procédé selon l'une quelconque des revendications précédentes, comprenant une chambre de combustion, un séchoir raccordé à la chambre de combustion par un conduit de gaz chauds et pourvu du côté de son entrée d'une unité d'alimentation, un conduit de transport relié à la sortie du séchoir et pourvu d'un ventilateur d'entraînement, et un appareil séparateur avec un conduit de transport qui débouche dans un appareil de filtration, caractérisée en ce que le conduit de transport (13) qui relie l'appareil séparateur (11) et l'appareil de filtration (16) est agencé de manière à recevoir des émissions de gaz de séchage qui sont au-dessus du point de rosée; en ce que l'appareil de filtration (16) est isolé contre les influences de la température ambiante; en ce qu'entre l'appareil de filtration (16) et la chambre de combustion (1) est agencé un conduit de transport (31) avec un ventilateur (30) pour les particules filtrées pour leur combustion dans la chambre de combustion (1); et en ce qu'un conduit tubulaire (34) avec un clapet régulateur (35) et un clapet anti-retour (36) est monté en dérivation depuis le conduit de transport (31) derrière le ventilateur (30) et s'étend jusqu'au conduit (10) qui véhicule le produit séché.

7. Installation selon la revendication 6, caractérisée en ce que l'appareil de filtration (16) possède une chemise (21) isolée contre les influences de la température environnante, qui est agencée à écartement des parois du carter de filtre et des parois de tête du filtre (22, 23), ce dernier étant en particulier construit à paroi double, et qui est chauffée au gazole, à l'énergie électrique ou aux gaz chauds.

8. Installation selon la revendication 7, caractérisée en ce qu'un conduit tubulaire (24) avec un clapet anti-retour intégré (25) et un ventilateur intégré (26) est agencé entre le conduit tubulaire (4) et la double paroi (21) de l'appareil de filtration (16).

9. Installation selon l'une quelconque des revendications 6 à 8, caractérisée en ce qu'un ventilateur (30) destiné à produire un flux d'air de balayage par dépression, un clapet de réglage (32) et un clapet anti-retour (33) sont intégrés dans le conduit de transport (31).

10. Installation selon l'une quelconque des revendications 6 à 9, caractérisée en ce que des filtres en forme de manches, de poches ou similaires, qui s'étendent dans un plan vertical, sont logés dans l'appareil de filtration (16), le matériau filtrant ayant un taux de rétention de l'humidité relativement faible, de préférence au maximum de 1 % et/ou un certain poli, et/ou étant antistatique, et/ou étant soumis à une faible charge de surface grâce à des vitesses d'écoulement incident faibles.

11. Installation selon l'une quelconque des revendications 6 à 10, caractérisée en ce qu'une unité de filtre (28) interchangeable à charbon, à gravier ou similaire est agencée dans la région supérieure de l'appareil de filtration (16) entre le raccordement du conduit tubulaire (13) et la tête (27) du filtre.

12. Installation selon l'une quelconque des revendications 6 à 11, caractérisée en ce que le cyclone (11) et les conduits tubulaires (13, 17, 24, 31, 34) sont isolés contre les influences de la température environnante.